# EUROPÄISCHE PATENTANMELDUNG

(11) **EP 4 615 113 A1**
(43) Veröffentlichungstag der Anmeldung: **10.09.2025**
(21) Anmeldenummer: 25160537.4
(22) Anmeldetag: 27.02.2025
(51) Int. Cl.: H04W 72/12, H04Q 9/00, H04W 4/38, H04W 4/70, H04W 52/02, H04W 84/18

(54) **VERFAHREN ZUM BETRIEB EINES FUNKKNOTENS SOWIE FUNKKNOTEN**

(30) Priorität: 05.03.2024 DE 102024106303
(71) Anmelder: Diehl Metering GmbH, 91522 Ansbach (DE)
(72) Erfinder: Gronauer, Christoph, 90602 Pyrbaum (DE); Riegel, Herbert, 91617 Oberdachstetten (DE); Hünenberger, Patrick, 91522 Ansbach (DE)
(74) Vertreter: Diehl Patentabteilung

(57) **Zusammenfassung**

Verfahren zum Betrieb eines bidirektionalen Funkknotens (10), insbesondere eines Sensorknotens, vorzugsweise eines Verbrauchszählers, in einer Netzwerkinfrastruktur (6), wobei der Funkknoten (10) mindestens eine Funktechnologie (21, 22) unterstützt und vorzugsweise mit einer autarken Energiequelle, insbesondere in Form einer Longlife-Batterie (16) betrieben wird, wobei der Funkknoten (10) Daten in Form von vorzugsweise konfigurierbaren Datentypen an einen Empfänger (3, 4) versendet, und wobei eine periodische, insbesondere in der Periodizität individuell festlegbare, Versendung (1, 2) von Daten durch den Funkknoten (10) erfolgt, wobei die periodische Versendung (1, 2) von Daten durch den Funkknoten (10) unter Berücksichtigung einer Priorisierung erfolgt, wobei für eine vorrangige Versendung (1 bzw. 2) von Daten oder für eine vorrangige bidirektionale Kommunikation (20) das periodische Versenden (1, 2) der Daten unterbrochen wird, indem periodisch vorgesehene Versendungen (1 bzw. 2) nicht ausgeführt werden oder zeitlich verschoben werden.

## Beschreibung

Die vorliegende Erfindung betrifft ein Verfahren zum Betrieb eines bidirektionalen Funkknotens gemäß Anspruch 1. Ferner betrifft die vorliegende Erfindung einen Funkknoten nach Anspruch 19.

### Technologischer Hintergrund

Eine Netzwerkinfrastruktur umfasst typischerweise mehrere Funkknoten sowie mindestens ein Gateway und mindestens ein Head-End. Die Funkknoten werden vorwiegend mit einer autarken Energiequelle in Form einer Longlife-Batterie betrieben und kommunizieren hierbei per Funk mit dem Gateway, welches die empfangenen Daten an das Head-End weiterleitet und umgekehrt. Bei einer bidirektionalen Datenübertragung werden Versendungen in Form einer Uplink-Übertragung von dem Funkknoten über das Gateway an das Head-End gesendet und in Form einer Downlink-Übertragung von dem Head-End über das Gateway an den Funkknoten gesendet.

Die Funkknoten können hierbei unterschiedliche Netzwerkprotokolle, z. B. Long Range Wide Area Network (LoRaWAN), MIOTY, Open Metering System (OMS) und/oder drahtloses M-BUS, unterstützen. Zusätzlich oder alternativ können Funkknoten in verschiedenen Kommunikationsbetriebsarten, z. B. stationary mode" (mode S), "frequent transmit mode" (mode T), "frequent receive mode" (mode R), "compact mode" (mode C), "narrowband VHF" (mode N) und/oder "frequent receive and transmit mode" (mode F) des drahtlosen M-BUS oder "Class A", "Class B" und/oder "Class C" von LoRaWAN, betrieben werden.

Funkknoten senden typischerweise Versendungen von Daten in periodischen Zeitabständen bzw. Intervallen aus. Insbesondere, wenn die Funkknoten mehrere Kommunikationsbetriebsarten und/oder Netzwerkprotokolle unterstützen, kann der Fall eintreten, dass eine Versendung von Daten durchgeführt werden soll, während bereits eine andere Versendung von Daten durchgeführt wird. In diesem Fall, besteht das Risiko, dass die momentan durchgeführte Versendung abgebrochen wird, damit die andere Versendung gestartet werden kann. Hierbei wird die abgebrochene Versendung nicht bis zum Ende durchgeführt, wodurch diese wiederholt werden muss. Dasselbe betrifft auch eine bidirektionale Kommunikation, die durch den Beginn einer anderen Versendung abgebrochen wird. Dies verursacht einen hohen Energieverbrauch und schädigt deshalb das Energiebudget der Energieversorgung des Funkknotens.

Aus dem Stand der Technik sind bereits Verfahren zur Koordination von Versendungen und/oder der bidirektionalen Kommunikation bekannt. Diese Verfahren werden z. B. durch die entsprechenden Normen, z. B. LoRaWAN L2 1.0.4 Spezifikation (TS001-1.0.4), der ETSI TS 103 357 V1.1.1 (2018-06), EN 13757-4 bzw. Open Metering System Specification Vol.2 - Primary Communication Issue 5.0.1 / 2023-12, beschreiben.

### Aufgabe der vorliegenden Erfindung

Aufgabe der vorliegenden Erfindung ist es, ein verbessertes Verfahren zum Betrieb eines Funkknotens zur Verfügung zu stellen, welches eine Reduzierung des Energieverbrauchs bei gleichbleibender Dienstgüte gewährleistet.

### Lösung der Aufgabe

Die vorstehende Aufgabe wird durch ein Verfahren zum Betrieb eines Funkknotens gemäß Anspruch 1 sowie durch einen Funkknoten nach Anspruch 19 gelöst. Zweckmäßige Ausgestaltungen sind in den abhängigen Ansprüchen beansprucht.

Erfindungsgemäß ist ein Verfahren zum Betrieb eines bidirektionalen Funkknotens, insbesondere eines Sensorknotens, vorzugsweise eines Verbrauchszählers, in einer, vorzugsweise bidirektionalen, Netzwerkinfrastruktur vorgesehen, wobei der Funkknoten mindestens eine Funktechnologie unterstützt und vorzugsweise mit einer autarken Energiequelle, insbesondere in Form einer Longlife-Batterie betrieben wird, wobei der Funkknoten Daten in Form von, vorzugsweise konfigurierbaren, Datentypen an mindestens einen Empfänger, z. B. ein Gateway oder ein Head-End, versendet, und wobei eine periodische, insbesondere in der Periodizität individuell festlegbare, Versendung von Daten durch den Funkknoten erfolgt. Erfindungsgemäß erfolgt die periodische Versendung von Daten durch den Funkknoten unter Berücksichtigung einer Priorisierung, wobei für eine vorrangige Versendung von Daten oder für eine vorrangige bidirektionale Kommunikation das periodische Versenden der Daten unterbrochen wird, indem periodisch vorgesehene Versendungen nicht ausgeführt werden oder zeitlich verschoben werden. Hierdurch können die Versendungen entsprechend ihrer Priorisierung durchgeführt werden. Demnach kann gewährleistetet werden, dass eine periodische Versendung nicht abgebrochen wird, sobald eine vorrangige periodische Versendung oder eine vorrangige bidirektionale Kommunikation durchgeführt bzw. gestartet wird. Infolgedessen wird ein erneutes Durchführen der abgebrochenen periodischen Versendung vermieden. Dies führt zu einer Reduktion des Energieverbrauchs des Funkknotens. Die Dienstgüte des Funkknotens wird hingegen beibehalten.

Bei der periodischen Versendung von Daten werden die Daten in aufeinanderfolgenden Zeitintervallen versendet. Diese Zeitintervalle legen die Periodizität fest. An den Sendezeitpunkten kann jedoch eine pseudozufällige zeitliche Varianz des Aussendens stattfinden, sodass der Zeitpunkt einer Versendung von Daten nach Ablauf des Zeitintervalls hierbei etwas variieren kann. Hierdurch können Kollisionen bei der Versendung von Daten vermieden werden.

Zweckmäßigerweise sind im Rahmen der periodischen Versendung von Daten durch den Funkknoten priorisierte Versendungen und weniger priorisierte Versendungen vorgesehen, wobei einer priorisierten Versendung gegenüber einer weniger priorisierten Versendung ein, insbesondere zeitlicher, Vorrang in der Abfolge der Versendung eingeräumt wird, und die zeitliche Abfolge der priorisierten Versendung und der weniger priorisierten Versendung derart erfolgt, dass die weniger-priorisierte Versendung nicht mit der priorisierten Versendung kollidiert. Hierdurch kann beispielsweise eine weniger priorisierte Versendung zurückgestellt werden, d. h. zeitlich verschoben oder nicht ausgesendet werden, sodass diese erst zu einem Zeitpunkt durchgeführt wird, wenn zu diesem Zeitpunkt keine priorisierte Versendung durchgeführt werden würde. Hierdurch kann insbesondere verhindert werden, dass eine weniger priorisierte Versendung abgebrochen wird, damit eine priorisierte Versendung durchgeführt werden kann.

Vorteilhafterweise kann einer bidirektionalen Kommunikation zwischen dem Funkknoten und dem Empfänger ein, insbesondere zeitlicher, Vorrang gegenüber periodischen Versendungen der Daten, insbesondere einer priorisierten Versendung oder einer weniger priorisierten Versendung, eingeräumt werden. Infolgedessen kann eine bidirektionale Kommunikation priorisiert behandelt werden, wodurch dieser Vorrang eingeräumt wird. Hierdurch kann sichergestellt werden, dass eine stattfindende bidirektionale Kommunikation nicht abgebrochen wird und wiederholt werden muss. Da eine bidirektionale Kommunikation einen hohen Energiebedarf aufweist, kann hierdurch besonders effektiv der Energieverbrauch des Funkknotens reduziert werden.

Vorzugsweise kann für eine Priorisierung, vorzugsweise für eine bidirektionale Kommunikation oder eine priorisierte Versendung, ein Zeitbereich als priorisiertes Zeitintervall festgelegt oder reserviert werden. Insbesondere können in dem Zeitbereich periodische Versendungen, insbesondere weniger priorisierte periodische Versendungen, nicht ausgeführt werden oder zeitlich derart verschoben werden, dass sie nicht in den Zeitbereich fallen. Hierdurch können Zeitbereiche im Funkknoten reserviert werden, zu welchen nur priorisierte Versendungen oder eine bidirektionale Kommunikation durchgeführt werden sollen. Infolgedessen kann der Funkknoten den zeitlichen Ablauf der periodischen Versendungen und/oder der bidirektionalen Kommunikation steuern.

Indem der Zeitbereich auf eine periodische Versendung und einer daraufhin erhaltenen Rückantwort in Form einer Downlink-Übertragung des Empfängers zum Aufbau einer bidirektionalen Kommunikation festgelegt oder reserviert werden kann, können andere periodische Versendungen des Funkknotens in dem Zeitbereich verhindert werden. Hierdurch wird ein Abbrechen der bidirektionalen Kommunikation durch eine periodische Versendung verhindert. Vorteilhafterweise wird der Zeitbereich der bidirektionalen Kommunikation erst mit einem Empfangen der Rückantwort des Empfängers festgelegt oder reserviert.

Vorzugsweise kann ein fester Zeitrahmen, insbesondere ein fester maximaler Zeitrahmen, des Zeitbereichs vorgegeben sein. Dieser Zeitrahmen kann vorteilhafterweise nicht verlängert werden, sodass eine für den Zeitbereich vorgesehene periodische Versendung oder eine für den Zeitbereich vorgesehene bidirektionale Kommunikation, die länger dauert als durch den Zeitrahmen vorgegeben ist, abgebrochen wird. Hierdurch wird der Funkknoten vor einem zu hohen Energieverbrauch geschützt.

Dadurch, dass die Reservierung des Zeitbereichs aufgehoben werden kann, wenn die bidirektionale Kommunikation oder die periodische Versendung beendet ist, kann der nicht mehr benötigte, reservierte Zeitbereich für periodische Versendungen des Funkknotens freigegeben werden.

Vorteilhafterweise kann die bidirektionale Kommunikation des Funkknotens mit dem mindestens einem Empfänger, z. B. dem Gateway und/oder dem Head-End, aus einer Sequenz von Kommandos, insbesondere dem Funkknoten, unbekannter Länge bestehen.

Vorzugsweise kann die Priorisierung auf Basis
- eines Energieverbrauchs zulasten der autarken Energiequelle und/oder
- einer geforderten Sendehäufigkeit bzw. Dienstgüte, und/oder
- einer geforderten Sendeintervalllänge bzw. Intervallgüte, und/oder
- einer tatsächlichen Sendehäufigkeit, und/oder
- einer tatsächlichen Versendungsdauer, und/oder
- einer Kanalbelegung bzw. eines Duty-Cycles
bestimmt werden.

Der Energieverbrauch der periodischen Versendung und/oder der bidirektionalen Kommunikation zulasten der autarken Energiequelle kann zweckmäßigerweise vom Funkknoten bestimmt oder geschätzt werden. Alternativ kann der Energieverbrauch der periodischen Versendung und/oder der bidirektionalen Kommunikation vorgegeben und z. B. im Funkknoten abgespeichert sein. Vorzugsweise weist eine periodische Versendung und/oder eine bidirektionale Kommunikation mit einem hohen Energieverbrauch eine höhere Priorität auf und umgekehrt.

Vorzugsweise bezieht sich die geforderte Sendehäufigkeit bzw. Dienstgüte auf eine Vorgabe, wie oft der Funkknoten innerhalb eines vorgegebenen Zeitraums, z. B. innerhalb eines Tages, periodische Versendungen durchführen soll. Hierbei kann der periodischen Versendung und/oder der bidirektionalen Kommunikation eine höhere Priorität zugewiesen werden, wenn die geforderte Sendehäufigkeit noch nicht erreicht sein sollte.

Zweckmäßigerweise bezieht sich die geforderte Sendeintervalllänge bzw. Intervallgüte auf ein vorgegebenes Intervall oder einen vorgegebenen Intervallbereich, das bzw. der für die periodische Versendung eingehalten werden soll. Die Priorität der periodischen Versendung und/oder der bidirektionalen Kommunikation ist vorzugsweise umso höher, je strenger die Vorgaben für ein Einhalten des Intervalls oder des Intervallbereichs sind.

Die tatsächliche Sendehäufigkeit der periodischen Versendung bezieht sich insbesondere auf die tatsächliche Anzahl der periodischen Versendungen in einem, z. B. vorgegebenen, Zeitbereich. Hierbei kann eine periodische Versendung mit einer höheren tatsächlichen Sendehäufigkeit eine niedrigere Priorität aufweisen. Eine periodische Versendung mit einer niedrigeren Sendehäufigkeit kann hingegen eine höhere Priorität aufweisen.

Zweckmäßigerweise kann die Priorisierung basierend auf der tatsächlichen Versendungsdauer bestimmt werden. Die Versendungsdauer ist insbesondere die Zeit, die benötigt wird, um die periodische Versendung auszusenden.

Vorzugsweise kann die Priorität zusätzlich oder alternativ basierend auf der Kanalbelegung bzw. dem Duty-Cycle des für die periodische Versendung vorgesehenen Funkkanals bestimmt werden. Die Kanalbelegung ist das in Prozent ausgedrückte Verhältnis der Übertragungszeit des Funkknotens zu einem Beobachtungszeitraum, z. B. einer Stunde.

Indem die Priorität der jeweiligen periodischen Versendungen dynamisch bestimmt werden kann, kann die Priorität der periodischen Versendungen an sich ändernde Gegebenheiten angepasst werden.

Zweckmäßigerweise ist die Priorisierung wie in folgender Tabelle festgelegt:

| **Priorität** | **Art der Aussendung von Daten** |
|---|---|
| Höchste Priorität | Aussendung als Start einer bidirektionalen Kommunikation |
| Zweithöchste Priorität | Aussendung von sendezeitpunktrelevanten Daten |
| Dritthöchste Priorität | Aussendung an ein Fixed Network |
| Vierthöchste Priorität | Aussendung an ein Mobile Network |

Bei der Aussendung von sendezeitpunktrelevanten Daten handelt es sich insbesondere um Versendungen, welche eine besondere zeitliche Güte aufweisen. Dies bedeutet insbesondere, dass die Versendungen zu einem vorgegebenen Zeitpunkt ausgesendet werden sollen, bei dem im Vergleich zu anderen Versendungen geringe zeitliche Toleranz eingehalten werden soll.

Vorteilhafterweise wird die Priorisierung nicht auf Basis eines Alarms und/oder nicht auf Basis nicht periodischer Daten festgelegt.

Vorzugsweise unterstützt der Funkknoten eine erste Funktechnologie sowie eine zweite Funktechnologie. Bei den Funktechnologien handelt es sich vorzugsweise um Netzwerkprotokolle und/oder Kommunikationsbetriebsarten. Hierdurch kann der Funkknoten über mehrere Funktechnologien mit einem oder mehreren Empfängern kommunizieren. Hierbei kann einer Funktechnologie eine höhere Priorisierung zugeordnet werden als der anderen.

Vorteilhafterweise kann die Reichweite der ersten Funktechnologie größer sein als diejenige der zweiten Funktechnologie. Vorzugsweise handelt es sich bei der ersten Funktechnologie um eine Fernbereichs-Funktechnologie und bei der zweiten Funktechnologie um eine Nahbereichs-Funktechnologie. Hierdurch kann z. B. in einem Wartungsfall von einer Serviceperson eine bidirektionale Kommunikation mit dem Funkknoten über die zweite Funktechnologie mit der geringeren Reichweite aufgebaut werden, der eine Priorisierung gegenüber der ersten Funktechnologie zukommt.

Vorzugsweise kann es sich bei der ersten Funktechnologie um ein Fixed Network, bei dem der Empfänger ortsfest installiert ist, und bei der zweiten Funktechnologie um ein Mobile Network, bei dem der Empfänger mobil ist, handeln. Hierdurch kann eine Kommunikation mit dem Funkknoten, z. B. ein Auslesen des als Verbrauchszählers ausgebildeten Funkknotens, durch eine Drive-by oder Walk-by Auslesung oder ein vorbeschriebener Serviceeinsatz ermöglicht werden.

Vorteilhafterweise handelt es sich bei der Funktechnologie, vorzugsweise bei der ersten Funktechnologie und/oder der zweiten Funktechnologie, um eine schmalbandige Funktechnologie. Insbesondere ist hierbei die Signalbandbreite des Funkknotens kleiner als 250 kHz, bevorzugt kleiner als 130 kHz, besonders bevorzugt kleiner als 20 kHz.

Zweckmäßigerweise kann es sich bei der Funktechnologie, vorzugsweise bei der ersten Funktechnologie und/oder der zweiten Funktechnologie, um eine ISM (Industrial, Scientific and Medical)-Funktechnologie handeln. Alternativ kann es sich bei der Funktechnologie, vorzugsweise bei der ersten Funktechnologie und/oder der zweiten Funktechnologie, um eine SRD (Short Range Device)-Funktechnologie handeln. Infolgedessen können Versendungen der ersten und/oder zweiten Funktechnologie über einen Funkkanal im Bereich von 169,400-169,475 MHz, 169,4000-169,8125 MHz, 433,05-434,79 MHz, 865,0-868,0 MHz oder 868,0-868,6 MHz oder 869,4-869,65 MHz oder 902-928 MHz durchgeführt werden.

Vorzugsweise kann bei der Funktechnologie, vorzugsweise bei der ersten Funktechnologie und/oder der zweiten Funktechnologie, Telegram-Splitting eingesetzt werden, wodurch die Daten oder Datentelegramme nicht am Stück, sondern gestückelt in Form von einzelnen Datenpaketen oder Teildatenpaketen versendet werden, und vom Empfänger, z. B. dem Gateway und/oder dem Head-End, wieder zusammengefügt bzw. rekombiniert (sog. Recombining) werden. Bei der bidirektionalen Kommunikation kann das Telegram-Splitting sowohl im Uplink als auch im Downlink ebenfalls zum Einsatz kommen.

Vorteilhafterweise handelt es sich bei der Funktechnologie, insbesondere bei der ersten Funktechnologie und/oder der zweiten Funktechnologie, um eine Chirp-basierte Funktechnologie. Hierbei ändert sich die Sendefrequenz der periodischen Versendung von Daten, insbesondere des Datentelegramms, mit dem die Daten ausgesendet werden, zeitlich.

Zweckmäßigerweise kommt bei der Funktechnologie, insbesondere bei der ersten Funktechnologie und/oder der zweiten Funktechnologie, ein Burst Mode zum Einsatz. Mittels des Burst Modes kann vorzugsweise eine Versendung von Daten, insbesondere eines Datentelegramms, einmal oder mehrfach mit demselben Dateninhalt durchgeführt werden. Hierfür kann ein Redundanzwert bestimmt werden, der die Anzahl von Wiederholung des Datentelegramms im Burst Mode bestimmt.

Zweckmäßigerweise können die einzelnen Datenpakete oder Teildatenpakete über einen einzigen Frequenzkanal oder alternativ im sogenannten Frequenzhopping über mehrere unterschiedliche Frequenzkanäle versendet werden.

Vorzugsweise ist für die periodische Versendung von Daten durch den Funkknoten ein konfigurierbarer Telegramminhalt vorgesehen. Infolgedessen können beliebige Daten ausgesendet werden.

Indem der Funkknoten nach dem Durchführen der periodischen Versendung mindestens ein Empfangsfenster öffnet, kann der Funkknoten nur zu bestimmten Zeiten empfangsbereit sein, wodurch der Energieverbrauch des Funkknotens weiter reduziert werden kann.

Zudem wird nebengeordnet ein bidirektionaler Funkknoten, insbesondere ein Sensorknoten, vorzugsweise ein Verbrauchszähler, beansprucht, wobei der Funkknoten eine Antenne, eine Sende-Empfangseinrichtung, eine Steuerungseinheit und vorzugsweise eine autarke Energiequelle, insbesondere in Form einer Longlife-Batterie, umfasst. Erfindungsgemäß wird der Funkknoten nach dem Verfahren gemäß einem der Ansprüche 1-18 betrieben.

Vorzugsweise ist das Verfahren zur Steuerung des Funkknotens in der Firmware des Funkknotens, insbesondere in der Firmware der Steuerungseinheit des Funkknotens, implementiert. Hierdurch kann der Funkknoten das Verfahren autark durchführen.

Zweckmäßigerweise handelt es sich bei dem Netzwerkprotokoll um das Long Range Wide Area Network (LoRaWAN)-Netzwerkprotokoll, wie es beispielsweise in der LoRaWAN L2 1.0.4 Spezifikation (TS001-1.0.4) beschrieben ist, und/oder das MIOTY-Netzwerkprotokoll, wie es z. B. in der ETSI TS 103 357 V1.1.1 (2018-06) beschrieben ist, und/oder um das Open Metering System (OMS)-Netzwerkprotokoll, wie es beispielsweise in der Open Metering System Specification - General Part Issue 2.4.1 / 2023-12 und/oder der Open Metering System Specification Vol.2 - Primary Communication Issue 5.0.1 / 2023-12 beschrieben ist, und/oder um das drahtlose M-BUS-Netzwerkprotokoll, wie es beispielsweise in der EN 13757-4 beschrieben ist.

Vorteilhafterweise handelt es sich bei der Kommunikationsbetriebsart der Funktechnologie, vorzugsweise bei der ersten Funktechnologie und/oder der zweiten Funktechnologie, um einen "stationary mode" (mode S) und/oder "frequent transmit mode" (mode T) und/oder "frequent receive mode" (mode R) und/oder "compact mode" (mode C) und/oder "narrowband VHF" (mode N) und/oder "frequent receive and transmit mode" (mode F) gemäß des drahtlosen M-BUS Netzwerkprotokolls, wie es beispielsweise in der EN 13757-4 beschrieben ist. Alternativ oder zusätzlich handelt es sich bei den Kommunikationsbetriebsarten der "Class A" und/oder "Class B" und/oder "Class C" gemäß des Long Range Wide Area Network (LoRaWAN) Netzwerkprotokolls, wie es beispielsweise in der LoRaWAN L2 1.0.4 Spezifikation (TS001-1.0.4) beschrieben ist.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte schematische Darstellung einer beispielhaften Netzwerkinfrastruktur mit mehreren bidirektionalen Funkknoten;
- Fig. 2: eine beispielhafte, stark vereinfachte schematische Darstellung des bidirektionalen Funkknotens gemäß Fig. 1;
- Fig. 3: eine beispielhafte Darstellung von periodischen Versendungen des Funkknotens nach Fig. 1 über die Zeit;
- Fig. 4a, b: eine beispielhafte Darstellung von periodischen Versendungen des Funkknotens nach Fig. 1 gemäß einem ersten Ausführungsbeispiel des Verfahrens, bei der eine weniger priorisierte Versendung verschoben wird;
- Fig. 5a, b: eine beispielhafte Darstellung von periodischen Versendungen des Funkknotens nach Fig. 1 gemäß einem zweiten Ausführungsbeispiel des Verfahrens, bei der eine weniger priorisierte Versendung nicht ausgesendet wird; sowie
- Fig. 6: eine beispielhafte Darstellung von periodischen Versendungen des Funkknotens nach Fig. 1 gemäß einem dritten Ausführungsbeispiel des Verfahrens, bei der eine bidirektionale Kommunikation Prioritätsvorrang hat.

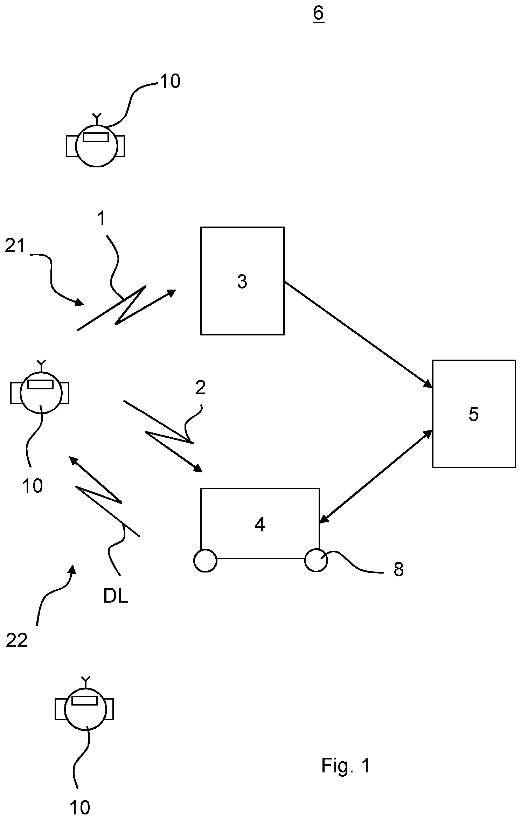

Bezugszeichen 6 in Fig. 1 bezeichnet eine Netzwerkinfrastruktur mit mehreren bidirektionalen Funkknoten 10 und einem Head-End 5. Zudem umfasst die Netzwerkinfrastruktur 6 ein erstes Gateway 3 und ein zweites Gateway 4.

Der Funkknoten 10 sendet z. B. Daten über eine erste periodische Versendung 1 in Form einer Uplink-Übertragung über eine erste Funktechnologie 21 an das erste Gateway 3 aus. Das erste Gateway 3 leitet die erste periodische Versendung 1 an das Head-End 5 weiter. Das Head-End 5 kann in Reaktion auf die erste periodische Versendung 1 eine (in den Figuren nicht dargestellte) Downlink-Übertragung über die erste Funktechnologie 21 aussenden.

Der Funkknoten 10 sendet zudem z. B. Daten über eine zweite periodische Versendung 2 in Form einer Uplink-Übertragung über eine zweite Funktechnologie 22 an das Gateway 4 aus, welches die zweite periodische Versendung 2 an das Head-End 5 weiterleitet. Das Head-End 5 kann als Reaktion auf die zweite periodische Versendung 2 eine Downlink-Übertragung DL aussenden, welche über das zweite Gateway 4 mittels der zweiten Funktechnologie 22 an den Funkknoten 10 weitergeleitet wird.

Vorzugweise öffnet der Funkknoten 10 nach der zweiten periodische Versendung 2 mindestens ein Empfangsfenster, um die Downlink-Übertragung DL des vom zweiten Gateway 4 zu empfangen. Hierdurch wird eine bidirektionale Kommunikation 20 zwischen dem Funkknoten 10 und dem zweiten Gateway 4 bzw. dem Head-End 5 ermöglicht, wobei die bidirektionale Kommunikation 20 aus einer Sequenz von Kommandos besteht, deren Länge dem Funkknoten 10 nicht bekannt ist. Durch die bidirektionale Kommunikation 20 kann z. B. die Firmware des Funkknotens 10 aktualisiert werden oder eine Zeitsynchronisierung durchgeführt werden. Die bidirektionale Kommunikation 20 umfasst die zweite periodische Versendung 2 und die durch die zweite periodische Versendung 2 ausgelöste Downlink-Übertragung DL.

Mittels der ersten bzw. zweiten periodischen Versendung 1, 2 werden Daten in Form von konfigurierbaren Datentypen mit einem konfigurierbaren Telegramminhalt vom Funkknoten 10 an das erste bzw. zweite Gateway 3, 4 gesendet und von diesen an das Head-End 5 weitergeleitet.

Das mittels der zweiten Funktechnologie 22 kommunizierende Gateway 4 kann, wie in Fig. 1 durch Räder 8 angedeutet, mobil sein. Somit kann es sich bei der zweiten Funktechnologie 22 um ein Mobile Network handeln. Bei der ersten Funktechnologie 21 kann es sich um ein Fixed Network mit einem Gateway 3 handeln. Insbesondere eignet sich die erste Funktechnologie 21 für eine Fernbereichskommunikation und die zweite Funktechnologie 22 für eine Nahbereichskommunikation. Insbesondere handelt es sich bei den Funktechnologien 21, 22 um unterschiedliche Netzwerkprotokolle.

Vorzugsweise wird die erste und/oder zweite Funktechnologie 21, 22 im Telegram-Splitting-Verfahren betrieben, bei dem Datenpakete in Teildatenpakete aufgeteilt, über verschiedene Frequenzen versendet und vom Empfänger zu Datenpaketen rekombiniert werden.

Alternativ kann die erste periodische Versendung 1 und die zweite periodische Versendung 2 über dieselbe Funktechnologie 21 bzw. 22 erfolgen. Somit können die periodischen Versendungen 1, 2 über dasselbe Gateway 3 bzw. 4 übertragen werden. Hierbei kann es sich bei der ersten periodischen Versendung 1 und der zweiten periodischen Versendung 2 insbesondere um unterschiedliche Kommunikationsbetriebsarten einer Funktechnologie 21 bzw. 22 handeln.

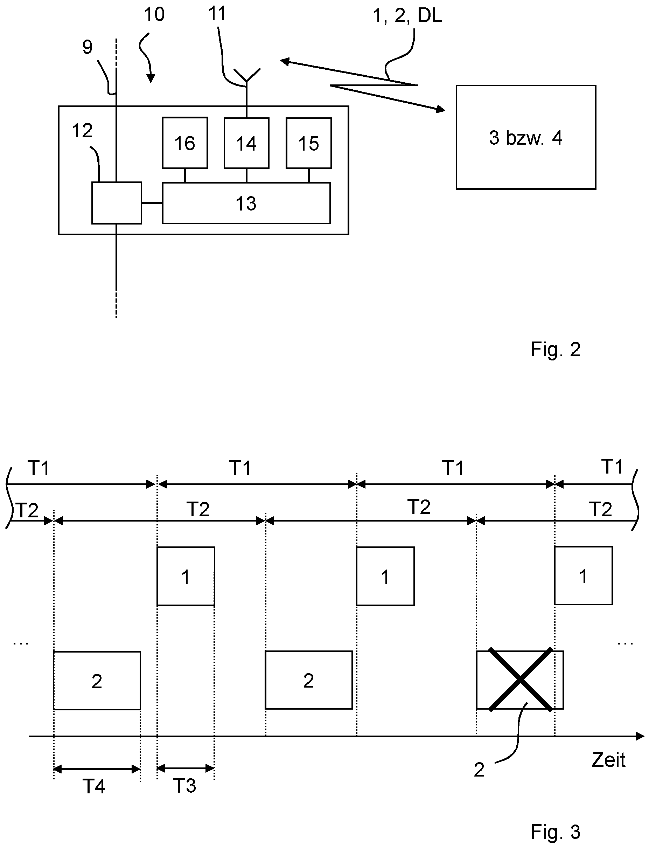

Der Funkknoten 10 wird über eine autarke Energiequelle in Form einer nicht aufladbaren Longlife-Batterie 16 mit Energie versorgt, vgl. Fig. 2. Im Normalfall kann mit einer derartigen Longlife-Batterie 16 eine Standzeit "im Feld" von mindestens zehn Jahren erreicht werden.

Der Funkknoten 10 umfasst zudem eine Steuerungseinheit 13 sowie einen Speicher 15. Bei dem in Fig. 2 gezeigten Funkknoten 10 handelt es sich um eine Sensoreinrichtung zur Erfassung von Daten jeglicher Art. Hierfür umfasst der Funkknoten 10 einen an einer Versorgungsleitung 9 angebrachten Sensor 12 beispielsweise zum Erfassen eines Stromverbrauchs oder eines Flüssigkeitsdurchflusses oder Gasdurchflusses.

Die von dem Sensor 12 gemessenen Messwerte werden an die Steuerungseinheit 13 übertragen und beispielsweise in einem Speicher 15 gespeichert. Die Steuerungseinheit 13 kann auf die im Speicher 15 gespeicherten Messwerte zugreifen und diese über eine Sende-Empfangseinrichtung 14 und eine Antenne 11 als erste oder zweite periodische Versendung 1, 2, z. B. als Datentelegramm, an das erste Gateway 3 über die erste Funktechnologie 21 oder das zweite Gateway 4 über die zweite Funktechnologie 22 aussenden. Mittels der Antenne 11 und der Sende-Empfangseinrichtung 14 kann der Funkknoten 10 die Downlink-Übertragungen DL empfangen.

Wie in Fig. 3 gezeigt ist, sendet der Funkknoten 10 Daten, z. B. Datentelegramme, als erste und zweite periodische Versendung 1, 2 in periodischen Zeitintervallen T1, T2 aus. Die Periodizität der Zeitintervalle T1, T2 ist individuell festlegbar.

Der Funkknoten 10 nimmt die erste periodische Versendung 1 in dem Zeitintervall T1 an das erste Gateway 3 vor, vgl. Fig. 3. Zudem wird die zweite periodische Versendung 2 in dem Zeitintervall T2 vom Funkknoten 10 an das zweite Gateway 4 vorgenommen. Somit wird nach Ablauf des jeweiligen Zeitintervalls T1, T2 eine erste bzw. zweite periodische Versendung 1 bzw. 2 durchgeführt.

Der Funkknoten 10 benötigt eine bestimmte Zeit T3, um die erste periodische Versendung 1 durchzuführen, und eine bestimmte Zeit T4, um die zweite periodische Versendung 2 durchzuführen. Infolgedessen kann, wie in Fig. 3 gezeigt ist, der Fall eintreten, dass die Übertragung einer zweiten periodischen Versendung 2 noch nicht beendet ist, wenn die erste periodische Versendung 1 nach Ablauf des Zeitintervalls T1 durchgeführt werden soll. In diesem Fall wird die Übertragung der zweiten periodischen Versendung 2 abgebrochen, vgl. die durchgestrichene zweite periodische Versendung 2 in Fig. 3, und die erste periodische Versendung 1 gestartet. Da die zweite periodische Versendung 2 nicht erfolgreich beendet wurde, muss diese erneut durchgeführt werden, damit die Daten vollständig im zweiten Gateway 4 vorliegen. Diese erneute Übertragung der zweiten periodischen Versendung 2 verursacht einen hohen Energieverbrauch des Funkknotens 10.

Um einen Abbruch der zweiten Versendung 2 zu vermeiden und ein wiederholtes Durchführen derselben Versendung zu verhindern, erfolgt die periodische Versendung 1, 2 von Daten durch den Funkknoten 10 unter Berücksichtigung einer Priorisierung, wobei für eine vorrangige Versendung 1 bzw. 2 der Daten oder für eine vorrangige bidirektionale Kommunikation 20 das periodische Versenden 1, 2 der Daten unterbrochen wird, indem periodisch vorgesehene Versendungen 1 bzw. 2 nicht ausgeführt werden oder zeitlich verschoben werden. Hierdurch kann einer priorisierten Versendung gegenüber einer weniger priorisierten Versendung Vorrang in der zeitlichen Abfolge der Versendungen eingeräumt werden, sodass die priorisierte Versendung nicht mit der weniger priorisierten Versendung kollidiert.

Hierbei wird die Priorisierung auf Basis eines Energieverbrauchs zulasten der autarken Energiequelle 16, und/oder einer geforderten Sendehäufigkeit (Dienstgüte), und/oder einer Sendeintervalllänge (Intervallgüte), und/oder einer tatsächlichen Sendehäufigkeit, und/oder einer tatsächlichen Versendungsdauer, und/oder einer Kanalbelegung (Duty Cycle) festgelegt.

Der Energieverbrauch der ersten und/oder zweiten periodischen Versendung 1, 2 hängt insbesondere vom Inhalt und/oder den Daten und/oder von den Anforderungen der ersten und/oder zweiten periodischen Versendung 1, 2 ab. So benötigt z. B. eine Fernbereichsübertragung der ersten Funktechnologie 21 deutlich mehr Energie als eine Nahbereichsübertragung der zweiten Funktechnologie 22. Insofern hat eine Fernbereichsübertragung aufgrund des höheren Energiebedarfs eine höhere Priorität als eine Nahbereichsübertragung.

Die geforderte Sendehäufigkeit bzw. Dienstgüte bezieht sich auf eine Zeitvorgabe, wie oft der Funkknoten 10 innerhalb eines vorgegebenen Zeitraums, z. B. innerhalb eines Tages, die erste oder zweite periodische Versendung 1, 2 durchführen soll. Hierbei hat diejenige periodische Versendung 1, 2 eine höhere Priorität, bei der die geforderte Sendehäufigkeit noch nicht erreicht ist.

Die geforderte Sendeintervalllänge bzw. Intervallgüte hingegen bezieht sich auf ein vorgegebenes Intervall oder auf einen vorgegebenen Intervallbereich, das bzw. der für die erste oder zweite periodische Versendung 1, 2 eingehalten werden soll. Infolgedessen ist die Priorität einer periodischen Versendung 1, 2 umso höher, je strenger die Vorgaben für das Einhalten des Intervalls bzw. des Intervallbereichs sind.

Die tatsächliche Sendehäufigkeit bezieht sich darauf, wie häufig die erste oder zweite periodische Versendung 1, 2 in einem vorgegebenen Zeitbereich durchgeführt wird. Bei einer hohen tatsächlichen Sendehäufigkeit, kann die erste oder zweite periodische Versendung 1, 2 zeitnah mit einer nachfolgenden ersten oder zweiten periodischen Versendung 1, 2 nachgeholt werden. Wenn die Sendehäufigkeit hingegen sehr gering ist, hat die entsprechende erste oder zweite periodische Versendung 1, 2 eine höhere Priorität, da diese erst deutlich später nachgeholt werden kann.

Die tatsächliche Versendungsdauer bezieht sich auf die Zeit, die benötigt wird, um die erste oder die zweite periodische Versendung 1, 2 von Daten durchzuführen. Die tatsächliche Versendungsdauer hängt z. B. von der Datenrate ab, mit der die erste oder die zweite periodische Versendung 1, 2 ausgesendet wird.

Zudem wird die Priorisierung durch die Kanalbelegung bzw. den Duty-Cycle des Funkkanals, über den die erste oder zweite periodische Versendung 1, 2 durchgeführt wird, beeinflusst. Vorzugsweise steigt mit zunehmender Kanalbelegung des Funkkanals die Priorität der ersten oder zweiten Versendung 1, 2.

Hierbei wird die Priorisierung dynamisch bestimmt. Hierdurch kann die Priorisierung der ersten oder zweiten Versendung 1, 2 an aktuelle Gegebenheiten angepasst werden.

Insbesondere ist die Priorisierung wie in folgender Tabelle festgelegt:

| **Priorität** | **Art der Aussendung von Daten** |
|---|---|
| Höchste Priorität | Aussendung als Start einer bidirektionalen Kommunikation 20 |
| Zweithöchste Priorität | Aussendung von sendezeitpunktrelevanten Daten |
| Dritthöchste Priorität | Aussendung an ein Fixed Network |
| Vierthöchste Priorität | Aussendung an ein Mobile Network |

Somit wird einer bidirektionalen Kommunikation 20 immer die höchste Priorität zugewiesen.

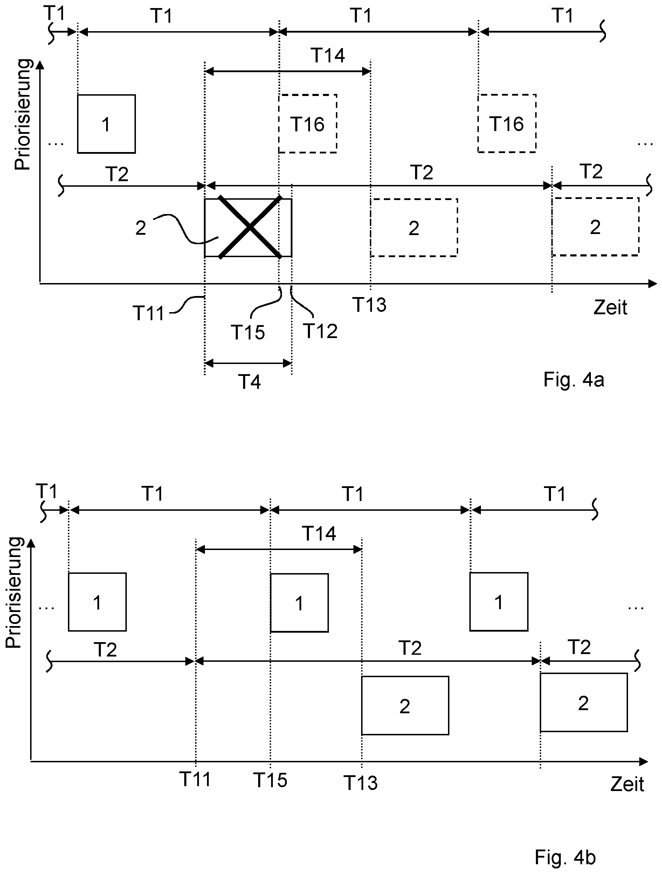

Fig. 4a und 4b zeigen einen beispielhaften Ablauf des Verfahrens gemäß einem ersten Ausführungsbeispiel. Hierbei weist die erste periodische Versendung 1 eine Priorisierung auf, wodurch die zweite periodische Versendung 2 weniger priorisiert ist.

Die erste periodische Versendung 1 wird in dem vorgegebenen Zeitintervall T1 durchgeführt. Die zweite periodische Versendung 2 wird in dem vorgegebenen Zeitintervall T2 durchgeführt. Im Funkknoten 10 werden Zeitbereiche T16 mit einem fest vorgegebenen maximalen Zeitrahmen reserviert, vgl. Fig. 4a, zu denen die erste periodische Versendung 1 nach Ablauf der jeweiligen Zeitintervalle T1 durchgeführt werden soll.

Wie in Fig. 4a gezeigt ist, soll eine zweite periodische Versendung 2 vom Funkknoten 10 durchgeführt werden, die zum Zeitpunkt T11 beginnt und zum Zeitpunkt T12 endet.

Der reservierte Zeitbereich T16 der ersten periodischen Versendung 1 beginnt zu dem Zeitpunkt T15, also zeitlich vor dem Zeitpunkt T12 zu dem die zweite periodische Versendung 2 enden soll. Folglich soll mit der Übertragung der ersten periodischen Versendung 1 begonnen werden, wenn die zweite periodische Versendung 2 noch nicht beendet ist.

Dies wird vom Funkknoten 10 erkannt, der der priorisierten ersten periodischen Versendung 1 Vorrang gegenüber der weniger priorisierten zweiten periodischen Versendung 2 gibt. Die zweite periodische Versendung 2 wird zum vorgesehenen Zeitpunkt T11 durch den Funkknoten 10 nicht ausgesendet, vgl. die durchgestrichene zweite periodische Versendung 2 in Fig. 4a. Stattdessen wird der Durchführungszeitpunkt der zweiten periodische Versendung 2 um die Zeit T14 verschoben, sodass die zweite periodische Versendung 2 zum Zeitpunkt T13 durchgeführt wird. Hierdurch wird sichergestellt, dass die zweite periodische Versendung 2 nicht in den Zeitbereich T16 fällt.

Sofern die erste periodische Versendung 1 beendet ist, bevor der vorgegebene maximale Zeitrahmen des Zeitbereichs T16 erreicht ist, wird die Reservierung des Zeitbereichs T16 freigegeben, sodass der nicht mehr benötigte Zeitbereich T16 für periodische Versendungen 1, 2 verwendet werden kann.

Wie in Fig. 4b gezeigt ist, kann die erste periodische Versendung 1 somit zum geplanten Zeitpunkt T15 stattfinden, ohne dass die zweite periodische Versendung 2 dadurch abgebrochen wird, da diese um die Zeit T14 verschoben wird und nun nicht mehr mit der ersten periodischen Versendung 1 kollidiert. Das vorgegebene Zeitintervall T2 zum Durchführen der zweiten periodischen Versendung 2 wird durch das Verschieben der zweiten periodischen Versendung 2 nicht beeinflusst.

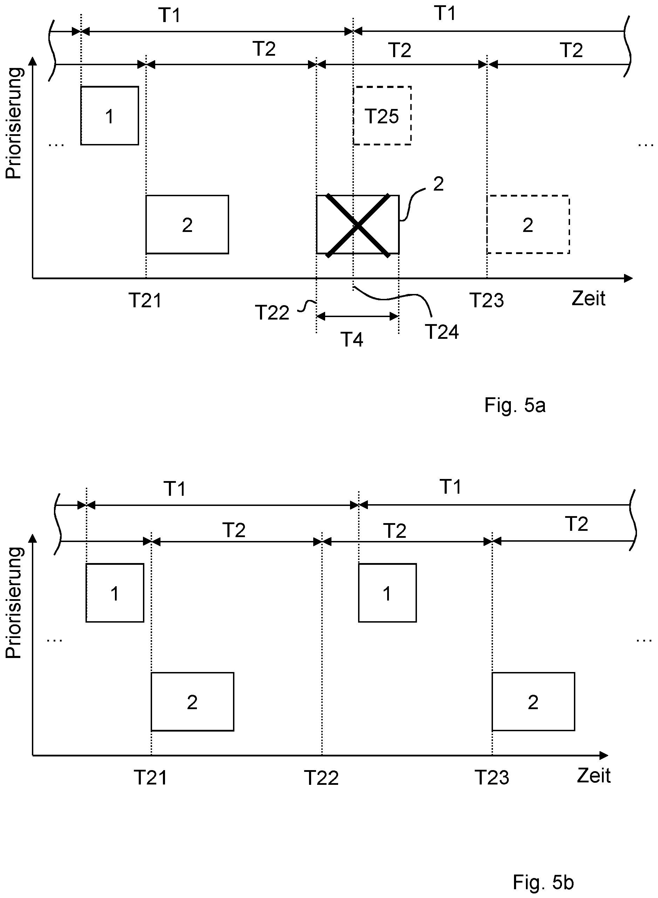

Gemäß einem zweiten Ausführungsbeispiel des Verfahrens, vgl. Fig. 5a und 5b, wird die zweite periodische Versendung 2 zu einem Zeitpunkt T21 durchgeführt. Nach Ablauf des Zeitintervalls T2 soll eine darauffolgende zweite periodische Versendung 2 zum Zeitpunkt T22 durchgeführt werden.

Zum Zeitpunkt T24 soll eine erste periodische Versendung 1 stattfinden, für die ein Zeitbereich T25 mit einem fest vorgegebenen maximalen Zeitrahmen reserviert ist. Der reservierte Zeitbereich T25 beginnt zum Zeitpunkt T24 und somit zeitlich vor dem Ende der Übertragung der zweiten periodischen Versendung 2. Wie im ersten Ausführungsbeispiel weist die erste periodische Versendung 1 eine Priorisierung gegenüber der zweiten periodischen Versendung 2 auf. Hierdurch wird der ersten periodischen Versendung 1 Vorrang gegeben.

Gemäß dem zweiten Ausführungsbeispiel wird die zweite periodische Versendung 2 nicht durchgeführt, vgl. die durchgestrichene zweite periodische Versendung 2 in Fig. 5a. Im zweiten Ausführungsbeispiel wird die nicht durchgeführte zweite periodische Versendung 2 im Gegensatz zum ersten Ausführungsbeispiel nicht verschoben. Stattdessen wird die zweite periodische Versendung 2 zum Zeitpunkt T22 ausgelassen, vgl. Fig. 5b. Die Daten und/oder der Inhalt der ausgelassenen zweiten periodischen Versendung 2 werden durch die darauffolgende zweite periodische Versengung 2 zum Zeitpunkt T23 übertragen. Durch das nicht Durchführen der zweiten periodischen Versendung 2 wird verhindert, dass diese aufgrund der priorisierten ersten periodischen Versendung 1 abgebrochen wird.

Sofern die erste periodische Versendung 1 beendet ist, bevor der vorgegebene maximale Zeitrahmen des Zeitbereichs T25 erreicht ist, wird die Reservierung des Zeitbereichs T25 freigegeben, sodass in dem nicht mehr benötigten Zeitbereich T25 periodische Versendungen 1, 2 stattfinden können.

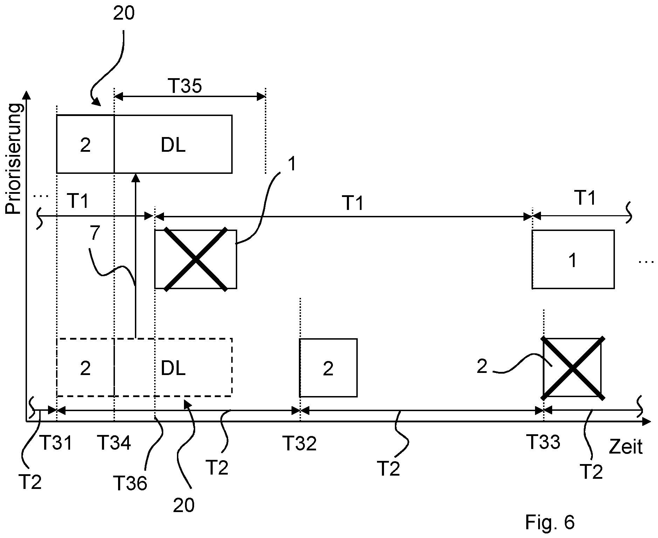

Gemäß einem dritten Ausführungsbeispiel, vgl. Fig. 6, ist die erste periodische Versendung 1 priorisiert gegenüber der zweiten periodischen Versendung 2. In Fig. 6 wird zum Zeitpunkt T31 eine zweite periodische Versendung 2 durchgeführt. Im Anschluss daran überträgt das zweite Gateway 4, vgl. Fig. 1, eine Downlink-Übertragung DL an den Funkknoten 10 als Antwort auf die zweite periodische Versendung 2. Der Funkknoten 10 empfängt die Downlink-Übertragung DL zum Zeitpunkt T34, wodurch die bidirektionale Kommunikation 20 startet. Eine solche bidirektionale Kommunikation kann z. B. bei einem Serviceeinsatz durch eine vor Ort befindliche Serviceperson stattfinden.

Hierbei wird der bidirektionalen Kommunikation 20 die höchste Priorität und somit ein Prioritätsvorrang 7 gegenüber der priorisierten ersten periodischen Versendung 1 und der weniger priorisierten zweiten periodischen Versendung 2 eingeräumt. Infolgedessen wird der bidirektionale Kommunikation 20 ein Vorrang gegenüber der ersten und zweiten periodischen Versendung 1, 2 eingeräumt.

Zudem wird mit dem Empfangen der Downlink-Übertragung DL ein Zeitbereich T35 mit einem fest vorgegebenen maximalen Zeitrahmen im Funkknoten 10 reserviert, der sich an den Zeitpunkt T34 des Empfangs der Downlink-Übertragung DL direkt anschließt. Die erste periodische Versendung 1, die zum Zeitpunkt T36 durchgeführt werden soll, liegt innerhalb des reservierten Zeitbereichs T35, sodass die erste periodische Versendung 1 aufgrund des Prioritätsvorrangs 7 der bidirektionalen Kommunikation 20 nicht durchgeführt wird, vgl. die durchgestrichene erste periodische Versendung 1 in Fig. 6. Hierdurch wird verhindert, dass die bidirektionale Kommunikation 20 durch die periodische Versendung 1 abgebrochen wird. Der Inhalt und/oder die Daten der ersten periodischen Versendung 1 werden erst mit der darauffolgenden ersten periodischen Versendung 1 nach Ablauf des Zeitintervalls T1 übertragen, vgl. das zweite Ausführungsbeispiel des Verfahrens gemäß der Fig. 5a, 5b. Alternativ kann die erste periodische Versendung 1 auch gemäß dem ersten Ausführungsbeispiel des Verfahrens, vgl. Fig. 4a und 4b, verschoben werden.

Die bidirektionale Kommunikation 20 wird somit nicht unterbrochen, sodass eine Wiederholung derselben nicht notwendig ist. Hierdurch wird sichergestellt, dass eine begonnene bidirektionale Kommunikation 20 komplett durchgeführt wird. Da eine bidirektionale Kommunikation 20 besonders energieintensiv ist, kann hierdurch der Energieverbrauch des Funkknotens 10 besonders effektiv reduziert werden.

Sofern die bidirektionale Kommunikation 20 vor dem Ablauf des vorgegebenen maximalen Zeitrahmens des Zeitbereichs T35 beendet ist, kann die Reservierung des Zeitbereichs T35 des Funkknotens 10 aufgehoben werden. Infolgedessen können periodische Versendungen 1, 2 vom Funkknoten 10 durchgeführt werden. Sofern die bidirektionale Kommunikation 20 länger als der vorgegebene maximale Zeitrahmen des Zeitbereichs T35 dauert, wird die bidirektionale Kommunikation 20 mit Erreichen des maximalen Zeitrahmens abgebrochen. Hierdurch wird ein übermäßiger Energieverbrauch durch die lange andauernde bidirektionale Kommunikation 20 vermieden.

Nach Abschluss der bidirektionalen Kommunikation 20 wird eine erneute zweite periodische Versendung 2 nach Ablauf des Zeitintervalls T2 zum Zeitpunkt T32 durchgeführt, vgl. Fig. 6. Die zweite periodische Versendung 2 hat hierbei die gleiche Priorisierung wie vor der bidirektionalen Kommunikation 20 und ist somit im Vergleich zur ersten periodischen Versendung 1 weniger priorisiert. Nach Ablauf eines weiteren Zeitintervalls T2 ist eine erneute Durchführung der zweiten periodischen Versendung 2 zum Zeitpunkt T33 geplant. Diese fällt jedoch zeitlich mit der priorisierten ersten periodischen Versendung 1 zusammen. Dementsprechend wird die zweite periodische Versendung 2 zum Zeitpunkt T33 nicht durchgeführt, vgl. die durchgestrichene zweite periodische Versendung 2 in Fig. 6, sondern verschoben, vgl. erstes Ausführungsbeispiel nach Fig. 4a und 4b, oder ausgesetzt, vgl. zweites Ausführungsbeispiel nach Fig. 5a und 5b.

Zweckmäßigerweise ist das erfindungsgemäße Verfahren in der Firmware des Funkknotens 10, insbesondere in der Steuerungseinheit 13 des Funkknotens 10, implementiert. Hierdurch kann das Verfahren durch den Funkknoten 10 selbsttätig durchgeführt werden.

Gemäß dem Verfahren kann eine geringer priorisierte zweite periodische Versendung 2 verschoben oder ausgesetzt werden, falls diese mit einer priorisierten ersten periodischen Versendung 1 oder einer bidirektionalen Kommunikation 20 zeitlich kollidiert. Hierdurch kann verhindert werden, dass eine begonnene periodische Versendung 1, 2 abgebrochen wird, was zu einer effektiven Energieeinsparung beiträgt.

Die Erfindung stellt daher einen ganz besonderen Beitrag auf dem einschlägigen technischen Gebiet dar.

### BEZUGSZEICHENLISTE

- 1: Versendung
- 2: Versendung
- 3: Gateway
- 4: Gateway
- 5: Head-End
- 6: Netzwerkinfrastruktur
- 7: Prioritätsvorrang
- 8: Rad
- 9: Versorgungsleitung
- 10: Funkknoten
- 11: Antenne
- 12: Sensor
- 13: Steuerungseinheit
- 14: Sende-Empfangseinrichtung
- 15: Speicher
- 16: Longlife-Batterie
- 20: bidirektionale Kommunikation
- 21: Funktechnologie
- 22: Funktechnologie
- DL: Downlink-Übertragung
- T1: Zeitintervall
- T2: Zeitintervall
- T3: Zeit
- T4: Zeit
- T11-T13: Zeitpunkt
- T14: Zeit
- T15: Zeitpunkt
- T16: Zeitbereich
- T21-T24: Zeitpunkt
- T25: Zeitbereich
- T31-T34: Zeitpunkt
- T35: Zeitbereich
- T36: Zeitpunkt

## Patentansprüche

1. Verfahren zum Betrieb eines bidirektionalen Funkknotens (10), insbesondere eines Sensorknotens, vorzugsweise eines Verbrauchszählers, in einer Netzwerkinfrastruktur (6),
wobei der Funkknoten (10) mindestens eine Funktechnologie (21, 22) unterstützt und vorzugsweise mit einer autarken Energiequelle, insbesondere in Form einer Longlife-Batterie (16), betrieben wird,
wobei der Funkknoten (10) Daten in Form von, vorzugsweise konfigurierbaren, Datentypen an mindestens einen Empfänger (3, 4) versendet, und
wobei eine periodische, insbesondere in der Periodizität individuell festlegbare, Versendung (1, 2) von Daten durch den Funkknoten (10) erfolgt,
**dadurch gekennzeichnet, dass**
die periodische Versendung (1, 2) von Daten durch den Funkknoten (10) unter Berücksichtigung einer Priorisierung erfolgt, wobei für eine vorrangige Versendung (1 bzw. 2) von Daten oder für eine vorrangige bidirektionale Kommunikation (20) das periodische Versenden (1, 2) der Daten unterbrochen wird, indem periodisch vorgesehene Versendungen (1 bzw. 2) nicht ausgeführt werden oder zeitlich verschoben werden.

2. Verfahren nach Anspruch 1, **dadurch gekennzeichnet, dass** im Rahmen der periodischen Versendung (1, 2) von Daten durch den Funkknoten (10) priorisierte Versendungen (1) und weniger-priorisierte Versendungen (2) vorgesehen sind,
einer priorisierten Versendung (1) gegenüber einer weniger-priorisierten Versendung (2) ein Vorrang in der Abfolge der Versendung eingeräumt wird, und
die zeitliche Abfolge der priorisierten Versendung (1) und der weniger-priorisierten Versendung (2) derart erfolgt, dass die weniger-priorisierte Versendung (2) nicht mit der priorisierten Versendung (1) kollidiert.

3. Verfahren nach Anspruch 1 oder 2, **dadurch gekennzeichnet, dass** einer bidirektionalen Kommunikation (20) zwischen dem Funkknoten (10) und dem Empfänger (3, 4) ein Vorrang gegenüber periodischen Versendungen (1, 2) der Daten, insbesondere einer priorisierten Versendung (1) oder einer weniger-priorisierten Versendung (2), eingeräumt wird.

4. Verfahren nach einem der vorhergehenden Ansprüche, **dadurch gekennzeichnet, dass** für eine Priorisierung, vorzugsweise für eine bidirektionale Kommunikation (20) oder eine priorisierte Versendung (1), ein Zeitbereich (T16, T25, T35) als priorisiertes Zeitintervall festgelegt oder reserviert wird, und in dem Zeitbereich (T16, T25, T35) periodische Versendungen (1, 2) der Daten nicht ausgeführt werden oder so zeitlich verschoben werden, dass sie nicht in den Zeitbereich (T16, T25, T35) fallen.

5. Verfahren nach Anspruch 4, **dadurch gekennzeichnet, dass** der Zeitbereich (T16, T25, T35) auf eine periodische Versendung (1, 2) und einer daraufhin erhaltenen Rückantwort des Empfängers (3, 4) zum Aufbau einer bidirektionalen Kommunikation (20) festgelegt oder reserviert wird.

6. Verfahren nach Anspruch 4 oder 5, **dadurch gekennzeichnet, dass** für den Zeitbereich (T16, T25, T35) ein fester Zeitrahmen, insbesondere ein fester maximaler Zeitrahmen, vorgegeben ist.

7. Verfahren nach einem der vorhergehenden Ansprüche, **dadurch gekennzeichnet, dass** die bidirektionale Kommunikation (20) des Funkknotens (10) mit dem mindestens einen Empfänger (3, 4) aus einer Sequenz von Kommandos unbekannter Länge besteht.

8. Verfahren nach einem der vorhergehenden Ansprüche, **dadurch gekennzeichnet, dass** die Priorisierung auf Basis
- eines Energieverbrauchs zulasten der autarken Energiequelle (16), und/oder
- einer geforderten Sendehäufigkeit, und/oder
- einer Sendeintervalllänge, und/oder
- einer tatsächlichen Sendehäufigkeit, und/oder
- einer tatsächlichen Versendungsdauer, und/oder
- einer Kanalbelegung
festgelegt wird.

9. Verfahren nach einem der vorhergehenden Ansprüche, **dadurch gekennzeichnet, dass** die Priorisierung wie in folgender Tabelle festgelegt ist:
| **Priorität** | **Art der Aussendung von Daten** |
|---|---|
| Höchste Priorität | Aussendung als Start einer bidirektionalen Kommunikation (20) |
| Zweithöchste Priorität | Aussendung von sendezeitpunktrelevanten Daten |
| Dritthöchste Priorität | Aussendung an ein Fixed Network |
| Vierthöchste Priorität | Aussendung an ein Mobile Network |

10. Verfahren nach einem der vorhergehenden Ansprüche, **dadurch gekennzeichnet, dass** der Funkknoten (10) eine erste Funktechnologie (21) sowie eine zweite Funktechnologie (22) unterstützt.

11. Verfahren nach Anspruch 10, **dadurch gekennzeichnet, dass** die Reichweite der ersten Funktechnologie (21) größer ist als diejenige der zweiten Funktechnologie (22).

12. Verfahren nach Anspruch 10 oder 11, **dadurch gekennzeichnet, dass** es sich bei der ersten Funktechnologie (21) um ein Fixed Network, bei dem der Empfänger (3) ortsfest installiert ist, und bei der zweiten Funktechnologie (22) um ein Mobile Network, bei dem der Empfänger (4) mobil ist, handelt.

13. Verfahren nach einem der vorhergehenden Ansprüche, **dadurch gekennzeichnet, dass** es sich bei der Funktechnologie, vorzugsweise bei der ersten Funktechnologie (21) und/oder der zweiten Funktechnologie (22), um eine schmalbandige Funktechnologie handelt.

14. Verfahren nach einem der vorhergehenden Ansprüche, **dadurch gekennzeichnet, dass** es sich bei der Funktechnologie, vorzugsweise bei der ersten Funktechnologie (21) und/oder der zweiten Funktechnologie (22), um eine ISM- oder SRD-Funktechnologie handelt.

15. Verfahren nach einem der vorhergehenden Ansprüche, **dadurch gekennzeichnet, dass** bei der Funktechnologie, vorzugsweise bei der ersten Funktechnologie (21) und/oder der zweiten Funktechnologie (22), Telegram-Splitting zum Einsatz kommt.

16. Verfahren nach einem der vorhergehenden Ansprüche, **dadurch gekennzeichnet, dass** es sich bei der Funktechnologie, vorzugsweise bei der ersten Funktechnologie (21) und/oder der zweiten Funktechnologie (22), um eine Chirp-basierte Funktechnologie handelt.

17. Verfahren nach einem der vorhergehenden Ansprüche, **dadurch gekennzeichnet, dass** bei der Funktechnologie, vorzugsweise bei der ersten Funktechnologie (21) und/oder der zweiten Funktechnologie (22), ein Burst Mode zum Einsatz kommt.

18. Verfahren nach einem der vorhergehenden Ansprüche, **dadurch gekennzeichnet, dass** für die periodische Versendung (1, 2) von Daten durch den Funkknoten (10) ein konfigurierbarer Telegramminhalt vorgesehen ist.

19. Funkknoten (10) umfassend
eine Antenne (11),
eine Sende-Empfangseinrichtung (14),
eine Steuerungseinheit (13), und
vorzugsweise eine autarke Energiequelle, insbesondere in Form einer Longlife-Batterie (16),
**dadurch gekennzeichnet, dass**
der Funkknoten (10) nach dem Verfahren gemäß einem der vorhergehenden Ansprüche betrieben wird.
